(19) Europäisches Patentamt
European Patent Office
Office européen des brevets

(11) **EP 4 773 688 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
H04W 56/00 (2009.01)        H04W 24/08 (2009.01)
H04B 10/2575 (2013.01)      H04W 92/20 (2009.01)

(21) Application number: 24860090.0

(22) Date of filing: 18.06.2024

(52) Cooperative Patent Classification (CPC):
H04B 10/2575; H04W 24/08; H04W 56/00;
H04W 92/20

(86) International application number:
PCT/KR2024/008383

(87) International publication number:
WO 2025/048166 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.08.2023 KR 20230114395

(71) Applicant: SOLiD, Inc.
Gyeonggi-do 13493 (KR)

(72) Inventor: KIM, Okjin
Seongnam-si, Gyeonggi-do 13500 (KR)

(74) Representative: Jung, Minkyu
Wuesthoff & Wuesthoff
Patentanwälte und Rechtsanwalt PartG mbB
Schweigerstraße 2
81541 München (DE)

(54) **DISTRIBUTED ANTENNA SYSTEM AND OPERATING METHOD THEREOF**

(57) A distributed antenna system according to an aspect of the technical idea of the present disclosure comprises: a main unit; at least one hub unit selectively connected to the main unit; and a plurality of remote units each connected to the main unit or the at least one hub unit, wherein the distributed antenna system does not include a point of interest (POI) so that the main unit is directly connected to a distributed unit (DU) of a base station system through a cable.

**FIG. 3**

**Description**

TECHNICAL FIELD

The present disclosure relates to a distributed antenna system and an operating method thereof.

BACKGROUND ART

A distributed antenna system is an antenna system used to solve a high traffic capacity problem in an indoor environment or a predetermined area by spatially distributing a plurality of antennas.

The distributed antenna system is connected to a base transceiver station (BTS) and is being installed in building interiors, tunnels, subways, and the like so that communication services may be provided even in shadow areas where base station signals are difficult to reach, and is also used to provide smooth services in stadiums, large-scale facilities, places with high service demand, and the like.

Meanwhile, in O-RAN (Open Radio Access Network), which is an open network standard recently discussed, discussions on standardization of interfaces connecting a centralized unit (CU), a distributed unit (DU), and a remote unit (RU) of a base station, as well as the structure of a base station and a connection form of each unit, are being conducted. In this case, the structure and operation of the distributed antenna system also need to be appropriately changed in response to the structure and form of the base station.

DESCRIPTION OF EMBODIMENTS

TECHINCAL PROBLEM

An object of the present disclosure is to propose various changeable structures for a base station, and accordingly, to provide a distributed antenna system that may reduce power consumption.

An object of the present disclosure is to provide a delay setting method for synchronizing a distributed antenna system through linkage with a base station.

An object of the present disclosure is to provide a method for resolving signal quality degradation that occurs in the process of merging and processing signals from various operators.

An object of the present disclosure is to provide a distributed antenna system that enables communication services following the additional installation of heterogeneous communication nodes such as mmWave.

SOLUTION TO PROBLEM

To achieve the above objects, a distributed antenna system (DAS) according to an aspect of the technical concept of the present disclosure includes a main unit, at least one hub unit selectively connected to the main unit, and a plurality of remote units, each connected to the main unit or the at least one hub unit, and the DAS does not include a point of interest (POI), such that the main unit is directly connected to a distributed unit (DU) of a base station system via a cable.

An operating method of a DAS according to an aspect of the technical concept of the present disclosure includes: measuring a delay between each of remote units included in the DAS and the main unit; transmitting a DAS delay, which corresponds to a maximum value among the measured delays, to the DU; receiving a determination result from the DU as to whether to apply the DAS delay; and setting a delay time for each of the remote units based on the received determination result.

According to an embodiment, the receiving of the determination result may include: receiving a first determination result corresponding to applying the DAS delay when the DAS delay is less than a preset threshold; and receiving a second determination result corresponding to not applying the DAS delay when the DAS delay exceeds the threshold.

According to an embodiment, the setting of the delay time may include: based on receiving the first determination result, setting the delay time of each of the remote units such that a delay of each of the remote units corresponds to the DAS delay.

According to an embodiment, the setting of the delay time may include: based on receiving the second determination result, analyzing, for each of the remote units, whether there is interference with an adjacent cell; and setting the delay time of each of the remote units based on a result of the analysis.

According to an embodiment, the analyzing of whether there is interference with the adjacent cell may include analyzing whether there is interference with the adjacent cell based on at least one of location information of each of the remote units and an uplink signal of each of the remote units.

According to an embodiment, the setting of the delay time of each of the remote units based on the result of the analysis may include: for a remote unit for which interference with an adjacent cell does not exist, setting the delay time such that a delay corresponds to the DAS delay.

According to an embodiment, when a remote unit is added to the distributed antenna system, the method may further include: measuring a delay between the added remote unit and the main unit; and when the measured delay is smaller than the DAS delay, setting a delay time of the added remote unit such that a delay of the added remote unit corresponds to the DAS delay.

According to an embodiment, when the measured delay is greater than the DAS delay, the method may further include: changing the DAS delay to the measured delay and transmitting the changed DAS delay to the DU; receiving a determination result from the DU as to whether to apply the changed DAS delay; and setting the delay time of each of the remote units based on the received determination result.

ADVANTAGEOUS EFFECTS OF DISCLOSURE

According to an embodiment of the present disclosure, a structure in which some units constituting a base station are shared by operators is implemented, thereby improving the efficiency and economy of the base station configuration, and the distributed antenna system may also have improved efficiency and economy as the number of base station interface units is reduced or eliminated according to the configuration of the base station. In addition, since a signal amplification process of the base station and a signal attenuation process of the distributed antenna system may be omitted, power consumed in the signal amplification and attenuation processes may be reduced.

According to an embodiment of the present disclosure, the distributed antenna system provides information about the delay of the distributed antenna system to the base station, so that the base station performs settings such as a timing advance considering the delay of the distributed antenna system. Accordingly, it is possible to effectively prevent degradation of communication quality and speed due to unsuccessful synchronization due to the delay of the distributed antenna system, occurrence of interference between a downlink and an uplink, or failure to secure sufficient time for switching between the downlink and the uplink.

According to an embodiment of the present disclosure, the distributed antenna system may improve signal quality by adjusting a time offset or a phase offset of some of the subcarriers, thereby avoiding overlapping of peak levels and suppressing an increase in PAPR.

According to an embodiment of the present disclosure, the distributed antenna system supports the heterogeneous communication service according to the connection of a base station and a remote unit that provide the heterogeneous communication service, thereby enabling efficient construction of the service without installing separate lines or devices. In addition, the distributed antenna system automatically recognizes the connection of the base station and the remote unit that provide the heterogeneous communication service to allocate a dedicated channel, and provides the service by utilizing spare resources of the distributed antenna system, thereby improving installation convenience and enabling a stable and economical service.

The effects according to the technical concept of the present disclosure are not limited to the effects mentioned above, and other unmentioned effects will be clearly understood by those of ordinary skill in the art to which the present disclosure pertains from the following description.

BRIEF DESCRIPTION OF DRAWINGS

In order to more fully understand the drawings cited in the detailed description of the present disclosure, a brief description of each drawing is provided.

FIGS. 1 to 4 are diagrams illustrating a communication system including a connection structure of a base station and a distributed antenna system implemented corresponding thereto according to various embodiments of the present disclosure.
FIGS. 5 and 6 are flowcharts for explaining a delay setting and management method of a communication system according to an embodiment of the present disclosure.
FIG. 7 is a flowchart for explaining an operating method for PAPR improvement of a distributed antenna system according to an embodiment of the present disclosure.
FIG. 8 is an exemplary diagram related to the operating method of FIG. 7.
FIG. 9 is a diagram for explaining an operation in which a distributed antenna system provides a service to a heterogeneous communication node according to an embodiment of the present disclosure.

BEST MODE OF DISCLOSURE

Exemplary embodiments according to the technical idea of the present disclosure are provided to more fully explain the technical idea of the present disclosure to a person of ordinary skill in the art, and the following embodiments may be modified into various other forms, and the scope of the technical idea of the present disclosure is not limited to the following embodiments. Rather, these embodiments are provided so that this disclosure will be thorough and complete, and will fully convey the technical idea of the disclosure to those skilled in the art.

In the present disclosure, terms such as first and second are used to describe various members, regions, layers, portions, and/or constituent elements, but it is obvious that these members, components, regions, layers, portions, and/or constituent elements should not be limited by these terms. These terms do not imply a specific order, an up/down relationship, or superiority, and are used only to distinguish one member, region, portion, or constituent element from another member, region, portion, or constituent element. Accordingly, a first member, region, portion, or constituent element to be described below may refer to a second member, region, portion, or constituent element without departing from the teachings of the technical idea of the present disclosure. For example, without departing from the scope of rights of the present disclosure, a first constituent element may be named a second constituent element, and similarly, a second constituent element may also be named a first constituent element.

Unless otherwise defined, all terms used herein, including technical and scientific terms, have the same meaning as commonly understood by one of ordinary skill in the art to which the concept of the present disclosure belongs. In addition, terms that are commonly used, such as those defined in a dictionary, should be interpreted as having a meaning that is consistent with their meaning in the context of the relevant art and should not be interpreted in an overly formal sense unless explicitly defined herein.

When an embodiment may be implemented differently, a specific process order may be performed differently from the described order. For example, two processes described in succession may be performed substantially simultaneously, or may be performed in the reverse order of the described order.

In the accompanying drawings, for example, variations of the shapes shown may be expected depending on manufacturing techniques and/or tolerances. Accordingly, embodiments according to the technical idea of the present disclosure should not be construed as being limited to the specific shapes of regions shown in the present disclosure, and should, for example, include changes in shape that result from the manufacturing process. The same reference numerals are used for the same constituent elements in the drawings, and redundant descriptions thereof will be omitted.

The term 'and/or' as used herein includes each of the recited members and all combinations of one or more thereof.

Hereinafter, embodiments according to the technical idea of the present disclosure will be described in detail with reference to the accompanying drawings.

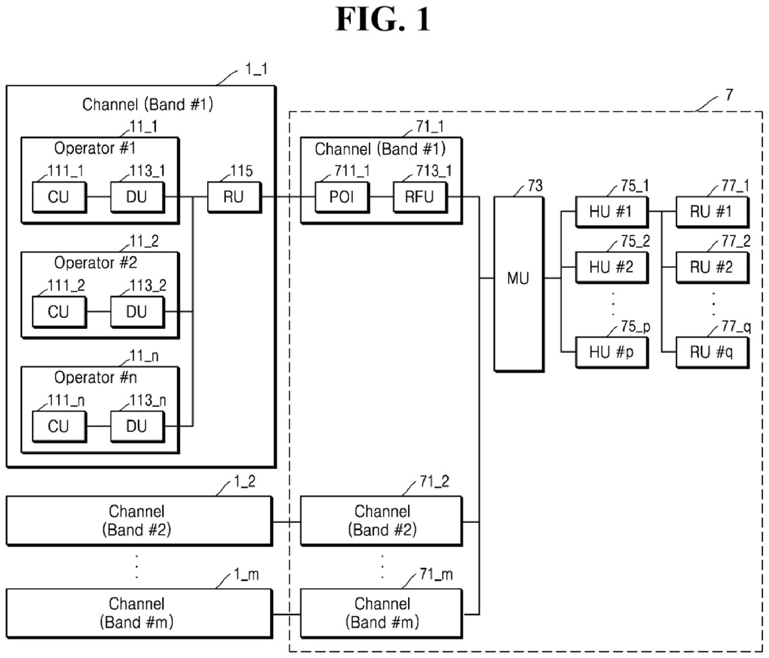

FIGS. 1 to 4 are diagrams illustrating a communication system including a connection structure of a base station and a distributed antenna system implemented corresponding thereto according to various embodiments of the present disclosure.

Referring to FIGS. 1 to 4, a communication system according to an embodiment of the present disclosure may include a base station system implemented for each frequency channel, and a distributed antenna system connected to the base station system.

Although not shown, a conventional base station is implemented in a form in which a centralized unit (CU), a distributed unit (DU), and a remote unit (RU) are integrally installed together at a cell site, and operators have individually configured and operated the base stations. According to this type of base station, a distributed antenna system was configured to include a plurality of points of interest (POIs) and a plurality of RF signal processing units (RFUs) corresponding to a plurality of base stations for each channel. The POI performs a signal processing operation such as attenuating a base station signal of a high power level transmitted from the base station. However, since the base station signal attenuated by the POI is a signal amplified for transmission from the base station side to the distributed antenna system, unnecessary power consumption occurs as the signal, which was amplified by consuming a certain amount of power, is attenuated again.

Meanwhile, recently, to overcome the problems associated with the integral implementation form of the base station, a C-RAN (cloud radio access network) structure in which the DU and the RU are physically separated is implemented, and in O-RAN (open radio access network), which is an open network standard, specifications for an interface between separated base station units are being discussed.

Based on this, referring to FIGS. 1 to 4, the present disclosure, based on the fact that communication nodes (CU, DU, and RU) constituting abase station can be physically separated from each other, proposes base station system structures in which some units are integrated and shared between operators, and structures of a distributed antenna system according thereto.

Referring to the embodiment of FIG. 1, base station systems 1_1 to 1_m may be configured in a form in which a plurality of operators 11_1 to 11_n (n is a natural number) share one RU 115, by including CUs 111_1 to 111_n and DUs 113_1 to 113_n implemented for each of a plurality of operators 11_1 to 11_n, and an RU 115 connected to the DUs 113_1 to 113_n of each of the operators.

Each of the communication nodes CU, DU, and RU may be implemented as at least one device, and each device may include hardware and software for transmitting and receiving communication signals (frames). The hardware may include components such as a processor, a memory, and a communication chip or circuit.

According to an embodiment, the CUs 111_1 to 111_n and the DUs 113_1 to 113_n may divide and process RRC, PDCP, High-RLC, Low-RLC, High-MAC, Low-MAC, and High-PHY layers. A CU 111_1 maybe directly linked with a core network, and may interface between the core network and the base station system.

The RU 115 is connected to the DUs 113_1 to 113_n of each of the operators 11_1 to 11_n and may transmit and receive a communication signal for each of the operators with a distributed antenna system 7 (or a user terminal). To this end, the RU 115 may support a frequency band of each of the operators 11_1 to 11_n.

In an uplink path, the RU 115 may divide a communication signal provided from the distributed antenna system 7 according to the frequency band of the operators 11_1 to 11_n, and transmit the divided signals to a corresponding operator's DU.

The plurality of DUs 113_1 to 113_n and the RU 115 may be connected by various communication media such as an optical cable, a high-speed cable, or a microwave cable.

According to an embodiment, the plurality of DUs 113_1 to 113_n and the RU 115 may comply with various fronthaul communication standards. For example, the plurality of DUs 113_1 to 113_n and the RU 115 may transmit and receive communication frames via CPRI (Common Public Radio Interface) or eCPRI(Ethernet-based Common Public Radio Interface).

The distributed antenna system 7 may include a plurality of base station interface units 71_1 to 71_m connected corresponding to each of frequency channels 71_1 to 71_m, a main unit (MU) or headend unit 73 connected to the plurality of base station interface units 71_1 to 71_m, at least one hub unit (HU) or expansion unit 75_1 to 75_p (p is a natural number) connected to the main unit 73, and a plurality of remote units 77_1 to 77_q (q is a natural number of 2 or more) connected to the main unit 73 or the hub units 75_1 to 75_p.

Each of the plurality of base station interface units 71_1 to 71_m may include a POI 711_1 and an RFU 713_1, and may interface between the base station systems 1_1 to 1_m and the main unit 73. In a downlink path, the POI 711_1 may adjust (attenuate) a power level of a high-power base station signal, and the RFU 713_1 may transmit the base station signal with the adjusted power level to the main unit 73. In an uplink path, the RFU713_1 receives a user terminal signal from the main unit 73, and the POI 711_1 may adjust (amplify) the power level of the user terminal signal and transmit it to the base station system 1_1. Meanwhile, the base station signal and the user terminal signal may be digitized RF signals, but are not limited thereto.

Whereas a conventional base station interface unit includes a plurality of POIs and RFUs, each connected to an RU for each operator, according to an embodiment of the present disclosure, since the RU 115 is shared by a plurality of operators 11_1 to 11_n, it is possible to implement a simplified base station interface unit, as each of the base station interface units 71_1 to 71_m may be implemented to include only one POI 711_1 and RFU 713_1.

Such base station interface units 71_1 to 71_m may be connected to the RU 115 via a coaxial cable, but are not limited thereto.

In the downlink path, the main unit 73 may receive the base station signals with adjusted power levels from the base station interface units 71_1 to 71_m. For example, the main unit 73 may be connected to the base station interface units 71_1 to 71_m via an optical cable, but is not limited thereto and may be connected via various communication media such as a high-speed cable or a microwave cable.

The main unit 73 may generate downlink transmission frames through a predetermined process (digital conversion, resampling, framing, etc.) on the received base station signals. The main unit 73 may distribute the generated downlink transmission frames to the hub units 75_1 to 75_p. Although not shown, remote units may be connected to the main unit 73, and in this case, the main unit 73 may distribute the downlink transmission frames to the connected remote units.

In the uplink path, the main unit 73 deframes uplink transmission frames transmitted from the hub units 75_1 to 75_p and/or the remote units, and after processing the data streams generated as a result of the deframing in correspondence with the corresponding base station system and operator among a plurality of base station systems 1_1 to 1_m and a plurality of operators 11_1 to 11_n, may transmit them to the base station through the base station interface units 71_1 to 71_m.

Meanwhile, the main unit 73 may allocate or reallocate capacity for communication services. Here, the capacity may mean capacity per service. And the main unit 73 may allocate or reallocate capacity for each service. Here, the service may mean a carrier, a frequency band, a sector, a service per operator, etc.

The hub units 75_1 to 75_p may expand the connection capacity of the main unit 73. For example, the hub units 75_1 to 75_p may be connected between the main unit 73 and the remote units 77_1 to 77_q to expand the connection capacity of the main unit 73. The hub units 75_1 to 75_p may transmit and receive a downlink transmission frame and an uplink transmission frame between the main unit 73 and the remote units 77_1 to 77_q among the connected remote units. Such hub units 75_1 to 75_p may be connected between the main unit 73 and the remote units via an optical cable, etc.

According to an embodiment, the hub units 75_1 to 75_p may convert the format of a signal transmitted during a signal delivery process. For example, the hub units 75_1 to 75_p may convert a digital signal transmitted from the main unit 73 into an Ethernet format, and may transmit the data converted into the Ethernet format to the connected remote units. And the hub units 75_1 to 75_p may convert a signal in an Ethernet format transmitted from the connected remote units into a digital signal and transmit it to the main unit 73.

According to an embodiment, the main unit 73 or the hub units 75_1 to 75_p may supply power to the connected remote units 77_1 to 77_q through PoE (Power of Ethernet), etc.

The remote units 77_1 to 77_q may be communicatively connected to the main unit 73 through the connected hub unit. According to an embodiment, the remote units 77_1 to 77_q may also be directly communicatively connected to the main unit 73.

The remote units 77_1 to 77_q may deframe the downlink transmission frames transmitted from the connected hub unit to generate data streams, and may restore the generated data streams to their original signals (e.g., RF signals, digitized RF signals). The remote units 77_1 to 77_q may output the restored signals in a form required by a user terminal, etc., located within the coverage area.

In addition, the remote units 77_1 to 77_q may generate uplink transmission frames through a predetermined process on various wireless signals received from a user terminal, etc., located within the service coverage area, and transmit the generated uplink transmission frames to the connected expansion unit (or main unit).

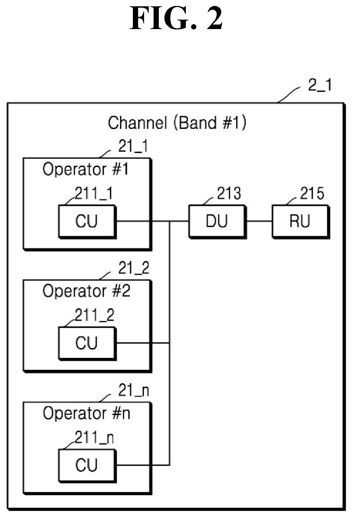

Referring to FIG. 2, the distributed antenna system is substantially the same as the distributed antenna system 7 of FIG. 1, and thus a description and illustration thereof are omitted.

In the embodiment of FIG. 2, the base station system 2_1 may be configured in a form where a DU 213 and an RU 215 are shared by a plurality of operators 21_1 to 21_n.

The DU 213 is connected to the CUs 211_1 to 211_n of each of the operators 21_1 to 21_n, and may transmit and receive a communication signal for each of the operators with the RU 215. In this case, the DU 213 may support a frequency band of each of the operators 21_1 to 21_n.

In the uplink path, the DU 213 divides a communication signal provided from the RU 215 according to the frequency band of the operators 21_1 to 21_n, and may transmit the divided signals to the CU 211_1 to 211_n of the corresponding operator.

The plurality of CUs 211_1 to 211_n and the DU 213 may be connected by various communication media such as an optical cable, a high-speed cable, or a microwave cable. The plurality of CUs 211_1 to 211_n and the DU 213 may comply with various midhaul communication standards. For example, the plurality of CUs 211_1 to 211_n and the DU 213 may transmit and receive communication frames via CPRI or eCPRI.

The RU 215 is connected to the DU 213 and may transmit and receive communication signals of the operators 21_1 to 21_n with the distributed antenna system 7 (or a user terminal). To this end, similarly to the embodiment of FIG. 1, the RU 215 may support the frequency band of each of the operators 21_1 to 21_n.

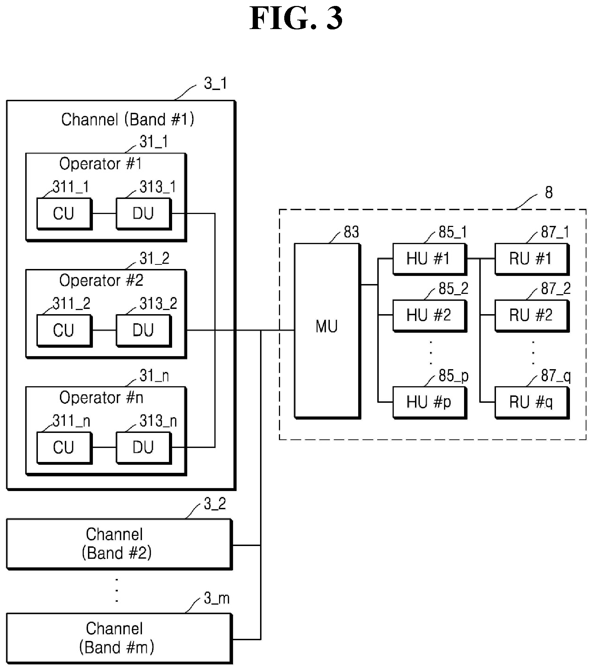

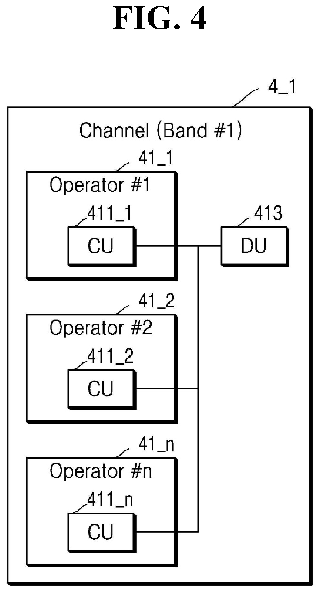

Referring to the embodiments of FIGS. 3 and 4, a structure in which a part (RU) of the base station system configuration is integrated into the distributed antenna system 8 may be considered.

In the case of FIG. 3, the base station systems 3_1 to 3_m may be configured to include CUs 311_1 to 311_n and DUs 313_1 to 313_n implemented for each of a plurality of operators 31_1 to 31_n. In this case, the DUs 313_1 to 313_n of the operators may be connected to a main unit 83 of the distributed antenna system 8.

The distributed antenna system 8 may include a main unit 83 in which an RU is integrated, at least one hub unit 85_1 to 85_p, and a plurality of remote units 87_1 to 87_q connected to the main unit 83 or the hub units 85_1 to 85_p. As the main unit 83 and the RU are integrated, the distributed antenna system 8 may not include the base station interface units 71_1 to 71_m shown in FIG. 1. In addition, signal amplification on the base station side, and a signal attenuation process in the POI may be eliminated, thereby preventing unnecessary power consumption of the communication system.

The MU 83 may be connected to the plurality of DUs 313_1 to 313_n by various communication media such as an optical cable, a high-speed cable, or a microwave cable, and may transmit and receive communication frames through a fronthaul communication standard such as CPRI or eCPRI.

Referring to FIG. 4, the base station system 4_1 may be configured in a form where, as in the embodiment of FIG. 3, an RU is integrated into the MU 83, and a DU 413 is shared by a plurality of operators 41_1 to 41_n. The DU 413 is connected to the CUs 411_1 to 411_n of each of the operators 41_1 to 41_n, and may transmit and receive a communication signal for each of the operators with the distributed antenna system 8. In this case, the DU 413 may support the frequency band of each of the operators 41_1 to 41_n.

In the uplink path, the DU 413 divides a communication signal provided from the MU 83 according to the frequency band of the operators 41_1 to 41_n, and may transmit the divided signals to the CU 411_1 to 411_n of the corresponding operator.

The plurality of CUs 411_1 to 411_n and the DU 413 may be connected by various communication media such as an optical cable, a high-speed cable, or a microwave cable. The plurality of CUs 411_1 to 411_n and the DU 413 may comply with various midhaul communication standards. For example, the plurality of CUs 411_1 to 411_n and the DU 413 may transmit and receive communication frames via CPRI or eCPRI.

According to the embodiments of FIGS. 1 to 4, as the base station system is implemented in a form where operators share some components (RU and/or DU) of the base station, the efficiency and economy of the base station may be improved.

The distributed antenna system also has improved efficiency and economy as the number of base station interface units is reduced or eliminated according to the configuration of the base station system, and the reduction in volume can effectively resolve the reduction of installation area and the constraints of installation location.

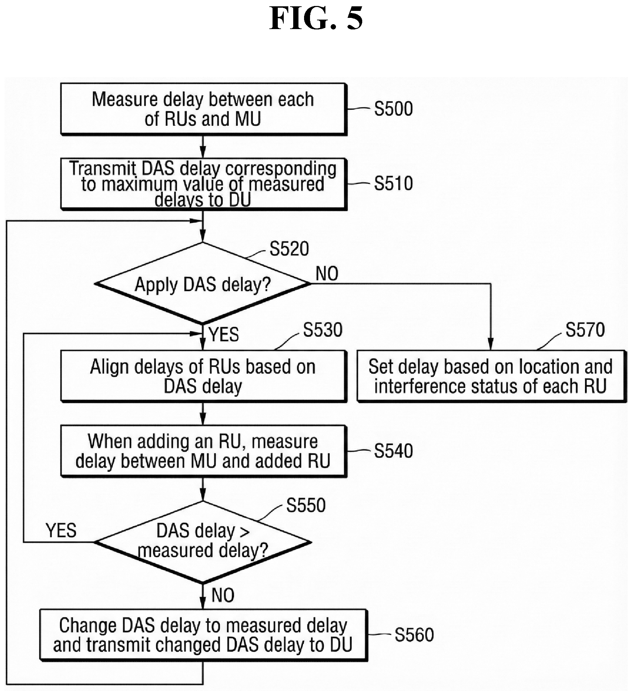

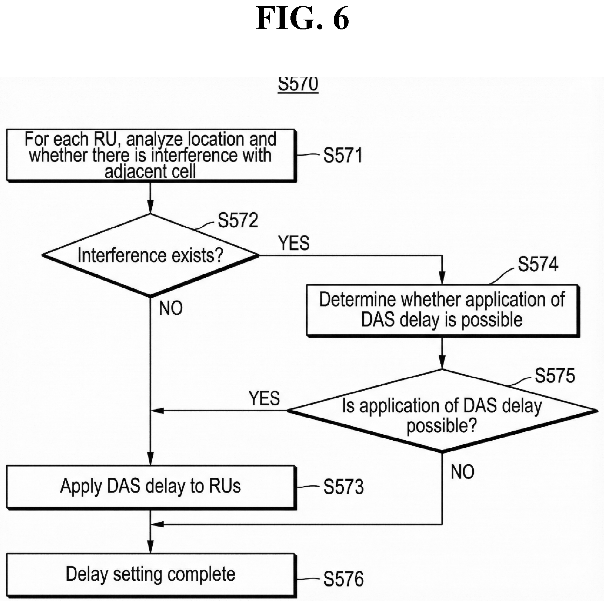

FIGS. 5 and 6 are flowcharts for explaining a delay setting and management method of a communication system according to an embodiment of the present disclosure.

For convenience of description below, the embodiments of FIGS. 5 and 6 will be described using a communication system having the structure of FIG. 4, but the structure of the communication system to which the present embodiment is applied may include the structure of FIG. 3, etc., as well as FIG. 4.

Referring to FIGS. 5 and 6, the distributed antenna system 8 may measure the delay between each of the remote units 87_1 to 87_q and the main unit 83 (S500).

The delay may be measured by the main unit 83 of the distributed antenna system 8, but is not limited thereto. For example, the delay may be a delay of a downlink path, and the main unit 83 may measure the delay by transmitting an arbitrary signal to each of the remote units 87_1 to 87_q and then using a reception acknowledgement signal (e.g., an ACK signal, etc.) received from each remote unit.

The delay between each of the remote units 87_1 to 87_q and the main unit 83 may vary depending on the location or distance of each of the remote units 87_1 to 87_q, whether there is interference, and so on.

According to an embodiment, the distributed antenna system 8 may also measure the delay for each frequency band or each carrier.

The distributed antenna system 8 defines the maximum value among the measured delays as a distributed antenna system (DAS) delay, and may transmit the DAS delay to the DU 413 of the base station system (S510).

The remote units 87_1 to 87_q should be synchronized to output the same signals at the same time in order to minimize interference between adjacent cells and support smooth handover to improve quality and performance. In order for all remote units 87_1 to 87_q to output the same signals at the same time, the output of other remote units must be delayed to match the remote unit with the longest measured delay.

Accordingly, the main unit 83 may provide delay time setting information to each of the remote units 87_1 to 87_q so that all remote units 87_1 to 87_q can output signals at the same time according to the maximum value among the measured delays, thereby setting the delay time of the remote units 87_1 to 87_q. The remote units 87_1 to 87_q may align the delays by individually delaying and outputting signals based on the received information. The maximum value is defined as the distributed antenna system (DAS) delay.

Meanwhile, a communication signal generated from the base station system 3_1 and transmitted to the distributed antenna system 8 may include a guard interval in addition to a payload. The base station system 3_1 may set the length of the guard interval considering a multipath environment, a channel bandwidth, a signal delay, an interval between symbols, etc., and for example, the guard interval may correspond to a CP (cyclic prefix) interval. The CP may be divided into two types, a short CP (normal CP) and a long CP (extended CP), according to its length, but is not limited thereto.

In the conventional case, since there is no connection for transmitting and receiving information such as delay between the base station system 3_1 and the distributed antenna system 8, the base station system 3_1 set the guard interval without considering the delay on the distributed antenna system 8 side. In this case, a problem may arise in that communication quality and speed are degraded because synchronization is not performed smoothly due to the delay on the distributed antenna system 8 side, interference occurs between the downlink and the uplink, or sufficient time for switching between the downlink and the uplink is not secured because the guard interval is not sufficiently secured.

According to an embodiment of the present disclosure, the main unit 83 is communicatively connected to the DU 413, and an interworking protocol, etc., may be defined according to a standard such as O-RAN. Therefore, the main unit 83 may transmit the DAS delay to the DU 413, and the DU 413 may minimize the above-mentioned problem by appropriately setting a timing advance for user terminals based on the received DAS delay.

Continuing to refer to FIG. 5, the base station system 3_1 may determine whether to apply the received DAS delay (S520).

For example, the DU 413 may determine whether to apply the DAS delay based on whether the DAS delay exceeds a preset threshold. The preset threshold may be set based on a maximum delay time that the base station system 3_1 can handle, a connection delay time between the DU 413 and the MU 83, and a connection delay time between an RU 87 and a user terminal that occurs according to a service range (radius) of the RU 87. For example, the threshold (TH) may be set according to Equation 1 below.

$$[\text{Equation 1}]$$
$$TH = Z - (A + S)$$

Here, Z means a maximum delay time that the base station system 3_1 can handle, A means a connection delay time between the DU 413 and the MU 83, and S means a connection delay time between an RU 87 and a user terminal according to a service range.

The DU 413 may determine to apply the DAS delay when the DAS delay is less than the threshold, and may determine not to apply the DAS delay when it exceeds the threshold. The DU 413 may transmit a determination result regarding whether to apply the DAS delay to the MU 83.

According to an embodiment, the DU 413 may set a timing advance value for each user terminal by reflecting the received DAS delay. Specifically, the DU 413 may set the timing advance value by reflecting the DAS delay so that signals output from each user terminal arrive at each of the remote units 87_1 to 87_q of the distributed antenna system 8 at the same time.

When it is determined to apply the DAS delay (YES in S520), the distributed antenna system 8 may align the delays of the remote units 87_1 to 87_q based on the DAS delay (S530).

As described above, the main unit 83 may set the delay time of the remote units 87_1 to 87_q by providing information about the DAS delay to the remote units 87_1 to 87_q so that all remote units 87_1 to 87_q output signals at the same time according to the DAS delay. The remote units 87_1 to 87_q may align their delays to the DAS delay by individually delaying and outputting signals based on the received information.

According to an embodiment, when the DAS delay is defined from delays measured for each frequency band or each subcarrier, the main unit 83 may perform delay alignment based on the DAS delay for each frequency band or each subcarrier.

According to an embodiment, the main unit 83 may enable the service by reducing the service range (radius) for a remote unit whose measured delay exceeds a threshold among the remote units.

According to an embodiment, when a new remote unit is added to the distributed antenna system 8, the distributed antenna system 8 may measure the delay between the main unit 83 and the added remote unit (S540).

When the measured delay is smaller than the DAS delay (YES in S550), the distributed antenna system 8 may align the delay of the added remote unit with other remote units based on the DAS delay (S530).

On the other hand, when the measured delay is greater than the DAS delay (NO in S550), the distributed antenna system 8 may change the DAS delay to the measured delay and transmit the changed DAS delay to the DU 413 (S560). The DU 413 determines whether to apply the changed DAS delay (S520), and the distributed antenna system 8 may perform step S530 or step S570 according to the determination result.

Meanwhile, when it is determined not to apply the DAS delay (NO in S520), the distributed antenna system 8 may set the delay based on the location of each of the remote units 87_1 to 87_q and whether there is interference (S570).

With reference to FIG. 6 in relation to step S570, the distributed antenna system 8 (e.g., the main unit 83) may analyze, for each of the connected remote units 87_1 to 87_q, whether an interference zone exists with an adjacent cell (S571).

The main unit 83 may analyze whether an interference zone exists with an adjacent cell based on the location information and/or uplink signals of each of the remote units 87_1 to 87_q. Specifically, the main unit 83 may determine that interference exists for remote units whose mutual distance is less than a reference distance, based on the location information of each of the remote units 87_1 to 87_q. In addition, the main unit 83 may receive an uplink signal of a predefined form from each of the remote units 87_1 to 87_q, and may determine whether interference exists based on the difference between the form of the received uplink signal and the predefined form.

For remote units for which it is determined that no interference exists as a result of the analysis (NO in S572), the distributed antenna system 8 may align the delays by applying the DAS delay to each of the corresponding remote units, regardless of whether the DAS delay is applicable from the DU 413 (S573). According to an embodiment, when a remote unit is added, and it is determined that no interference exists for the added remote unit, the distributed antenna system 8 may align the delay by applying the DAS delay to the added remote unit on its own, regardless of whether the DAS delay is applicable from the DU 413.

On the other hand, when it is determined that interference exists as a result of the analysis (YES in S572), the distributed antenna system 8 may determine whether the DAS delay can be applied (S574). For example, the MU 83 may analyze whether interference occurs when the DAS delay is applied to the remote units 87_1 to 87_q, or may analyze whether communication service can be provided when the DAS delay is applied, thereby determining whether the DAS delay can be applied.

When it is determined that the DAS delay can be applied (YES in S575), the distributed antenna system 8 may align the delays by applying the DAS delay to each of the remote units 87_1 to 87_q (S573). Alternatively, the distributed antenna system 8 may align the delay by applying the DAS delay to the added remote unit.

On the other hand, when the application of the DAS delay is not possible (NO in S575), the distributed antenna system 8 may complete the delay setting without delay alignment (S576).

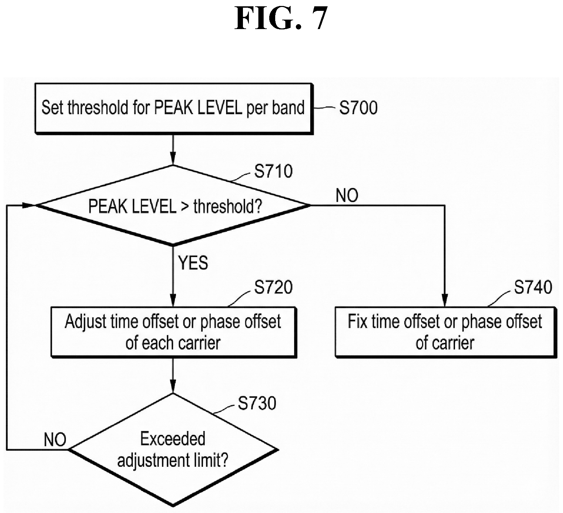

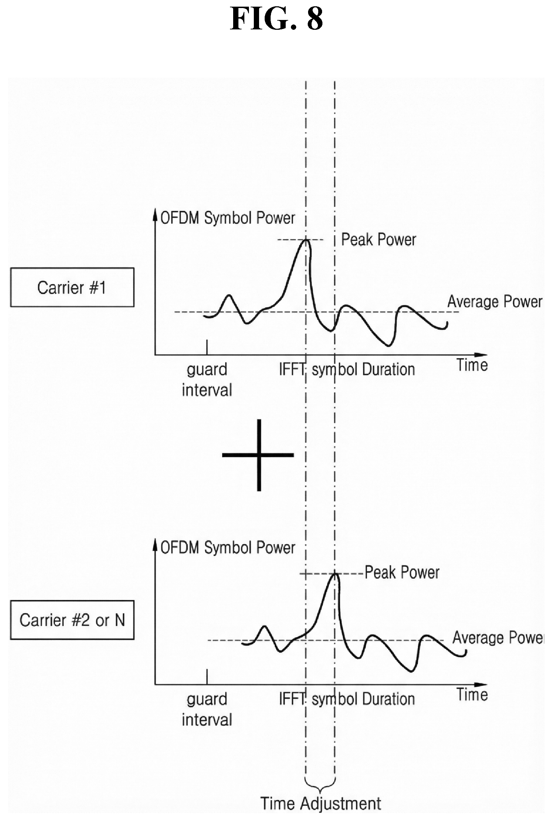

FIG. 7 is a flowchart for explaining an operating method for PAPR improvement of a distributed antenna system according to an embodiment of the present disclosure. FIG. 8 is an exemplary diagram related to the operating method of FIG. 7.

When operating a distributed antenna system, each remote unit adds, amplifies, and outputs signals of several subcarriers. At this time, in the process of combining the signals of several carriers, the PAPR (peak-to-average power ratio) of the signal becomes higher than that of a normal signal. If the PAPR increases, the dynamic range of the signal becomes large, making the design of an ADC and a DAC difficult, and causing deterioration of amplifier characteristics in the amplification part, which increases spurious waves. To improve this, clipping (CFR processing, etc.) for adjusting the PAPR to be below a design value may be performed, but there is a problem that signal quality degradation occurs when clipping is performed.

An operating method of a distributed antenna system according to an embodiment of the present disclosure for solving the above-mentioned problem will be described below with reference to FIGS. 7 and 8.

Referring to FIGS. 7 and 8, the distributed antenna system 8 may set a threshold for a peak level of a signal for each frequency band (per band) (S700).

The threshold is a value set by an administrator, etc., and may be changed according to a communication environment, etc. The threshold may be set to the same or different values for each frequency band.

The distributed antenna system 8 may compare the peak level of a merged subcarrier signal with the threshold when subcarriers are merged for each frequency band.

When the peak level exceeds the preset threshold (YES in S710), the distributed antenna system 8 may adjust a time offset and/or a phase offset of some of the subcarriers of the corresponding frequency band (S720).

The peak level of the merged subcarrier signal may increase significantly when the peak levels of each subcarrier have the same time point (or phase). That is, the peak level exceeding the preset threshold may mean that there are subcarriers with similar peak level time points or phases. Therefore, to reduce the peak level of the merged subcarrier signal, the distributed antenna system 8 may adjust (e.g., by a preset value) the time offset and/or the phase offset of some of the subcarriers of the corresponding frequency band.

Until an adjustment limit for the time offset and/or phase offset is not exceeded (NO in S730), the distributed antenna system 8 merges the offset-adjusted subcarriers, and if the peak level of the merged subcarrier signal exceeds the threshold, it may repeatedly adjust the time offset and/or phase offset of some of the subcarriers.

The adjustment limit may be set to a value within a TAE (Timing Alignment Error) defined in a standard such as 3GPP, but is not limited thereto.

On the other hand, when the peak level is below the preset threshold (NO in S710), the distributed antenna system 8 may fix the time offset and phase offset of the subcarriers of the corresponding frequency band (S740).

Referring to the example of FIG. 8, when the peak level of a first subcarrier and another subcarrier (e.g., a second subcarrier) are located at the same time point, the peak level may exceed a threshold due to an increase upon merging the first subcarrier and the second subcarrier. Accordingly, the distributed antenna system 8 (main unit 83) may shift the second subcarrier on the time axis by the time offset by adjusting the time offset of some of the subcarriers (the second subcarrier). Accordingly, since the peak levels of the first subcarrier and the second subcarrier are not located at the same time point, the peak level of the signal in which the first subcarrier and the second subcarrier are merged is lowered, so the PAPR may be improved.

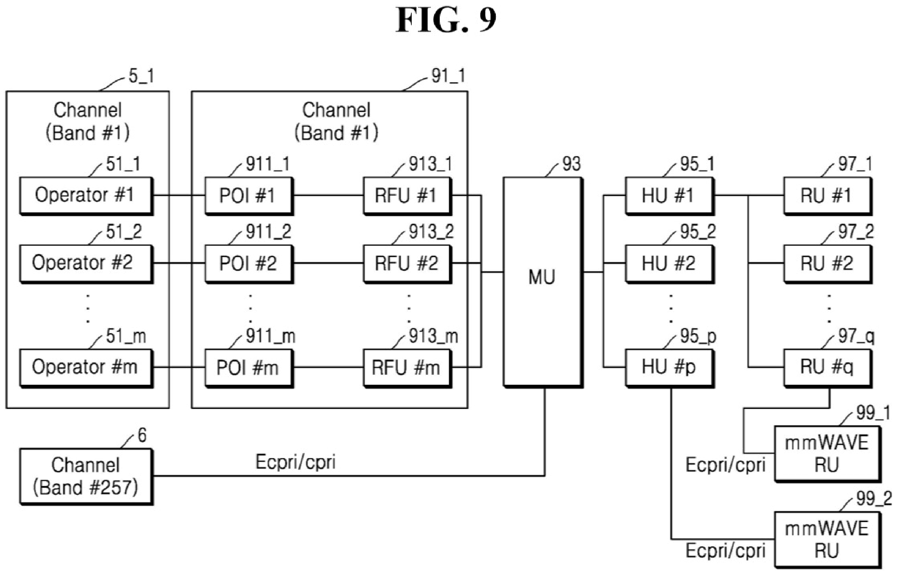

FIG. 9 is a diagram for explaining an operation in which a distributed antenna system provides a service to a heterogeneous communication node according to an embodiment of the present disclosure.

While a distributed antenna system is installed and operated in a building or the like, in a case where a smooth service cannot be provided due to an increase in users or the discovery of a shadow area, a new remote unit may be added to resolve the situation. Generally, a remote unit added to a distributed antenna system may provide a communication service with a base station to which the distributed antenna system is currently connected.

However, in a case where providing a communication service that uses a different type or a different frequency band is necessary in the building or the like where the distributed antenna system is installed, supporting the corresponding communication service through the already installed distributed antenna system may be more efficient than installing separate lines or relay devices. Therefore, an implementation method may be necessary in which the distributed antenna system can provide both an existing communication service and a heterogeneous communication service.

Based on this, referring to FIG. 9, a distributed antenna system may include a base station interface unit 91_1 connected to a base station system 5_1, a main unit 93, hub units 95_1 to 95_p, and remote units 97_1 to 97_q. In FIG. 9, for convenience of explanation, a conventional base station interface unit having POIs 911_1 to 911_m and RFUs 913_1 to 913_m for each operator has been shown, but the base station system 5_1 and the distributed antenna system may also be implemented in a form such as the embodiments of FIGS. 1 to 4.

In a case of intending to provide a mmWave service in a building (or region, etc.) where the distributed antenna system is installed, a base station 6 that provides the mmWave service (e.g., a CU or a DU) may be connected to the main unit 93. In addition, remote units 99_1, 99_2 that support the mmWave service may be connected to the hub unit 95_p or the remote unit 97_q. Although not shown, a remote unit that supports the mmWave service may also be connected to the main unit 93. In FIG. 9, mmWave has been shown as an example of heterogeneous communication, but the type of heterogeneous communication may be variously changed.

The main unit 93 may recognize that the base station 6 is connected through a specific port, analyze channel information of the recognized port, and based on the analysis result, may confirm whether the base station 6 provides the same type of communication service as existing connected base stations or a heterogeneous communication service.

When the confirmation result shows that the base station 6 provides a heterogeneous communication service (mmWave service), the main unit 93 may confirm whether remote units 99_1, 99_2 that support the heterogeneous communication service are connected to the distributed antenna system. For example, the main unit 93 may confirm the connection of the remote units 99_1, 99_2 that support the heterogeneous communication service based on the communication protocol of each of the currently connected remote units, but the method for confirming the connection may be implemented in various forms.

The main unit 93 may allocate a dedicated channel between the base station 6 that supports the heterogeneous communication service and the remote units 99_1, 99_2. In this case, a communication signal transmitted from the base station 6 may be transmitted to the remote units 99_1, 99_2 through the hub units 95_1, 95_p and/or the remote unit 97_q connected between the main unit 93 and the remote units 99_1, 99_2. In addition, the main unit 93 may support the heterogeneous communication service by transmitting a communication signal transmitted from the remote units 99_1, 99_2 to the base station 6.

According to the embodiment of FIG. 9, the distributed antenna system supports the heterogeneous communication service according to the connection of the base station and the remote unit that provide the heterogeneous communication service, thereby enabling efficient construction of the service without installing separate lines or devices. In addition, the distributed antenna system automatically recognizes the connection of the base station and the remote unit that provide the heterogeneous communication service to allocate a dedicated channel, and provides the service by utilizing spare resources of the distributed antenna system, thereby improving installation convenience and enabling a stable and economical service.

The description of the above embodiments is merely for the purpose of example with reference to the drawings for a more thorough understanding of the present disclosure, and thus should not be interpreted as limiting the technical idea of the present disclosure.

In addition, that various changes and modifications are possible within a scope not departing from the basic principles of the present disclosure will be apparent to a person of ordinary skill in the art to which the present disclosure pertains.

## Claims

1. An operating method of a distributed antenna system (DAS) in which a main unit is connected to a distributed unit (DU) of a base station system via a cable, the method comprising:

   measuring a delay between each of a plurality of remote units included in the DAS and the main unit;
   transmitting a DAS delay, which corresponds to a maximum value among the measured delays, to the DU;
   receiving a determination result from the DU as to whether to apply the DAS delay; and
   setting a delay time for each of the plurality of remote units based on the received determination result.

2. The method of claim 1, wherein the receiving of the determination result comprises:

   receiving a first determination result corresponding to applying the DAS delay when the DAS delay is less than a preset threshold; and
   receiving a second determination result corresponding to not applying the DAS delay when the DAS delay exceeds the threshold.

3. The method of claim 2, wherein the setting of the delay time comprises:
   based on receiving the first determination result, setting the delay time of each of the plurality of remote units such that a delay of each of the plurality of remote units corresponds to the DAS delay.

4. The method of claim 2, wherein the setting of the delay time comprises:

   based on receiving the second determination result, analyzing, for each of the plurality of remote units, whether there is interference with an adjacent cell; and
   setting the delay time of each of the plurality of remote units based on a result of the analysis.

5. The method of claim 4, wherein the analyzing of whether there is interference with the adjacent cell comprises:
   analyzing whether there is interference with the adjacent cell based on at least one of location information of each of the plurality of remote units and an uplink signal of each of the plurality of remote units.

6. The method of claim 4, wherein the setting of the delay time of each of the plurality of remote units based on the result of the analysis comprises:
   for a remote unit for which interference with an adjacent cell does not exist, setting the delay time such that a delay of the remote unit corresponds to the DAS delay.

7. The method of claim 1, wherein when a remote unit is added to the distributed antenna system, the method further comprises:

   measuring a delay between the added remote unit and the main unit; and
   when the measured delay is smaller than the DAS delay, setting a delay time of the added remote unit such that a delay of the added remote unit corresponds to the DAS delay.

8. The method of claim 7, further comprising:

   when the measured delay is greater than the DAS delay, changing the DAS delay to the measured delay and transmitting the changed DAS delay to the DU;
   receiving a determination result from the DU as to whether to apply the changed DAS delay; and
   setting the delay time of each of the plurality of remote units based on the received determination result.

9. A distributed antenna system, comprising:

   a main unit;
   at least one hub unit selectively connected to the main unit; and
   a plurality of remote units, each connected to the main unit or the at least one hub unit,
   wherein the distributed antenna system does not include a point of interest (POI), such that the main unit is directly connected to a distributed unit (DU) of a base station system via a cable.

**10.** The distributed antenna system of claim 9, wherein the main unit is configured to:

>measure a delay between each of the plurality of remote units and the main unit,
>transmit a DAS delay, which corresponds to a maximum value among the measured delays, to the DU,
>receive a determination result from the DU as to whether to apply the DAS delay, and
>set a delay time for each of the plurality of remote units based on the received determination result.

**11.** The distributed antenna system of claim 10, wherein the determination result is one of:
a first determination result corresponding to applying the DAS delay when the DAS delay is less than a preset threshold, and a second determination result corresponding to not applying the DAS delay when the DAS delay exceeds the threshold.

**12.** The distributed antenna system of claim 11, wherein, in response to receiving the first determination result, the main unit is configured to transmit delay time setting information for setting a delay of each of the plurality of remote units to correspond to the DAS delay to each of the plurality of remote units.

**13.** The distributed antenna system of claim 11, wherein, in response to receiving the second determination result, the main unit is configured to:

>analyze, for each of the plurality of remote units, whether there is interference with an adjacent cell, and
>set the delay time of each of the plurality of remote units based on a result of the analysis.

**14.** The distributed antenna system of claim 13, wherein the main unit is configured to analyze whether there is interference with the adjacent cell based on at least one of location information of each of the plurality of remote units and an uplink signal of each of the plurality of remote units.

**15.** The distributed antenna system of claim 13, wherein, for a remote unit for which interference with an adjacent cell does not exist, the main unit is configured to transmit delay time setting information for setting a delay to correspond to the DAS delay.

**16.** The distributed antenna system of claim 10, wherein when a remote unit is added to the distributed antenna system, the main unit is configured to:

>measure a delay between the added remote unit and the main unit, and

>when the measured delay is smaller than the DAS delay, transmit delay time setting information for setting a delay of the added remote unit to correspond to the DAS delay to the added remote unit.

**17.** The distributed antenna system of claim 16, wherein when the measured delay is greater than the DAS delay, the main unit is configured to:

>change the DAS delay to the measured delay and transmit the changed DAS delay to the DU,
>receive a determination result from the DU as to whether to apply the changed DAS delay, and
>set the delay time of each of the plurality of remote units based on the received determination result.

# FIG. 1

# FIG. 2

# FIG. 3

# FIG. 4

# FIG. 5

Measure delay between each of RUs and MU — S500

Transmit DAS delay corresponding to maximum value of measured delays to DU — S510

S520
Apply DAS delay? — NO

YES — S530

Align delays of RUs based on DAS delay

Set delay based on location and interference status of each RU — S570

When adding an RU, measure delay between MU and added RU — S540

S550
YES — DAS delay > measured delay?

NO

Change DAS delay to measured delay and transmit changed DAS delay to DU — S560

# FIG. 6

# FIG. 7

Set threshold for PEAK LEVEL per band — S700

S710

PEAK LEVEL > threshold?

NO

YES

S720

Adjust time offset or phase offset of each carrier

S730

Exceeded adjustment limit?

NO

S740

Fix time offset or phase offset of carrier

# FIG. 8

# FIG. 9

## INTERNATIONAL SEARCH REPORT

| International application No. |
| --- |
| **PCT/KR2024/008383** |

| A. | CLASSIFICATION OF SUBJECT MATTER |
| --- | --- |

**H04W 56/00**(2009.01)i; **H04W 24/08**(2009.01)i; **H04B 10/2575**(2013.01)i; **H04W 92/20**(2009.01)i

According to International Patent Classification (IPC) or to both national classification and IPC

| B. | FIELDS SEARCHED |
| --- | --- |

Minimum documentation searched (classification system followed by classification symbols)

H04W 56/00(2009.01); H04B 10/079(2013.01); H04B 10/2575(2013.01); H04B 17/14(2015.01); H04B 17/19(2015.01); H04B 7/06(2006.01); H04L 1/18(2006.01); H04L 25/02(2006.01); H04L 25/10(2006.01); H04W 72/21(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분산 안테나 시스템(DAS), 리모트 유닛(remote unit), 메인 유닛(main unit), 딜레이 (delay), 최대값(maximum value), 분산 유닛(distributed unit), 지연 시간(delay time), 허브 유닛(hub unit)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2016-0081125 A (SOLID, INC.) 08 July 2016 (2016-07-08)<br>See paragraphs [0032]-[0042] and [0084]; and figures 1 and 5. | 9 |
| A | | 1-8,10-17 |
| A | KR 10-2017-0079615 A (SOLID, INC.) 10 July 2017 (2017-07-10)<br>See paragraphs [0022]-[0037]; and figure 1. | 1-17 |
| A | KR 10-2023-0026395 A (LG ELECTRONICS INC.) 24 February 2023 (2023-02-24)<br>See paragraphs [0244]-[0266]; and figures 13-14. | 1-17 |
| A | US 2014-0248050 A1 (CELLULAR SPECIALTIES, INC.) 04 September 2014 (2014-09-04)<br>See paragraph [0062]; and figure 3. | 1-17 |
| A | WO 2022-107385 A1 (MITSUBISHI ELECTRIC CORPORATION) 27 May 2022 (2022-05-27)<br>See paragraphs [0119]-[0125]; and figure 12. | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 September 2024** | **19 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008383**

| Patent document cited in search report | | | Publication date (day/month/year) | Patent family member(s) | | | Publication date (day/month/year) |
|---|---|---|---|---|---|---|---|
| KR | 10-2016-0081125 | A | 08 July 2016 | EP | 3242421 | A1 | 08 November 2017 |
| | | | | EP | 3242421 | B1 | 17 March 2021 |
| | | | | US | 10396918 | B2 | 27 August 2019 |
| | | | | US | 2016-0205006 | A1 | 14 July 2016 |
| | | | | US | 2017-0117977 | A1 | 27 April 2017 |
| | | | | US | 9584386 | B2 | 28 February 2017 |
| | | | | WO | 2016-108312 | A1 | 07 July 2016 |
| KR | 10-2017-0079615 | A | 10 July 2017 | EP | 3396911 | A1 | 31 October 2018 |
| | | | | EP | 3396911 | B1 | 01 September 2021 |
| | | | | US | 11206599 | B2 | 21 December 2021 |
| | | | | US | 2018-0310226 | A1 | 25 October 2018 |
| | | | | WO | 2017-115925 | A1 | 06 July 2017 |
| KR | 10-2023-0026395 | A | 24 February 2023 | US | 2023-0262729 | A1 | 17 August 2023 |
| | | | | WO | 2022-015122 | A1 | 20 January 2022 |
| US | 2014-0248050 | A1 | 04 September 2014 | AU | 2014-226135 | A1 | 08 October 2015 |
| | | | | AU | 2014-226135 | B2 | 24 November 2016 |
| | | | | BR | 112015021322 | A2 | 18 July 2017 |
| | | | | CA | 2929224 | A1 | 12 September 2014 |
| | | | | CN | 105308937 | A | 03 February 2016 |
| | | | | EP | 2962446 | A1 | 06 January 2016 |
| | | | | IL | 241048 | A | 30 November 2015 |
| | | | | IL | 241048 | D0 | 30 November 2015 |
| | | | | JP | 2016-519862 | A | 07 July 2016 |
| | | | | KR | 10-2015-0140666 | A | 16 December 2015 |
| | | | | MX | 2015011490 | A | 03 October 2016 |
| | | | | US | 2017-0033869 | A1 | 02 February 2017 |
| | | | | US | 9467230 | B2 | 11 October 2016 |
| | | | | WO | 2014-137912 | A1 | 12 September 2014 |
| | | | | WO | 2014-137912 | A4 | 30 October 2014 |
| | | | | WO | 2016-210439 | A1 | 29 December 2016 |
| WO | 2022-107385 | A1 | 27 May 2022 | CN | 116458073 | A | 18 July 2023 |
| | | | | EP | 4248570 | A1 | 27 September 2023 |
| | | | | JP | 2023-545330 | A | 27 October 2023 |
| | | | | JP | 7483151 | B2 | 14 May 2024 |
| | | | | US | 11303341 | B1 | 12 April 2022 |

Form PCT/ISA/210 (patent family annex) (July 2022)